# EUROPEAN PATENT APPLICATION

(11) **EP 1 914 661 A1**
(43) Date of publication of application: **23.04.2008**
(21) Application number: 06122345.9
(22) Date of filing: 16.10.2006
(51) Int. Cl.: G06K 7/00, G06K 19/067, G06K 19/07

(54) **Microreader module able to establish a communication wireless with at least one transponder**

(71) Applicant: Sokymat Automotive GmbH, 51580 Reichshof-Wehnrath (DE)
(72) Inventor: Urban, Volker, 51647 Gummersbach (DE)
(74) Representative: Vigand, Philippe

(57) **Abstract**

The microreader module (1) includes mounted and encapsulated on a first surface (44) of a substrate (40) a first reader integrated circuit (2) with control logic (3) and memorisation means (4), a second integrated circuit (21), such as a microcontroller with a transponder circuit, switching means (15) and a coil (L1). Several external contact terminals (43) are disposed on a second surface (45) of the substrate. At least certain of these external terminals are electrically connected through the substrate (40) to the encapsulated electronic components (2, 21, 15, L1). The microreader module can be configured in a reader mode or in a transponder mode by the same coil (I1) via the switching means (15) directly or indirectly connected to the coil. These switching means are controlled by a control signal (Sel) supplied by at least one external contact terminal (43). In this manner, the same coil can be linked to the first reader integrated circuit (2) when the microreader module (1) is configured in the reader mode, or connected to the second transponder integrated circuit (21) when the microreader module is configured in the transponder mode. The microreader module is realised under the compact shape of a surface mounting component of small size.

## Description

The invention concerns a microreader module able to communicate wireless data or control signals with at least one transponder near to said module. A first integrated circuit with control logic and memorisation means, and a coil are mounted and encapsulated on a first surface of a substrate. The coil is arranged to be used as an antenna for transmission and reception of data or control signals of the first integrated circuit. Several external contact terminals are placed on an external surface of the module. Some of these terminals are electrically linked to the first integrated circuit and/or the coil.

Actually a high growing on the market of products and systems of RFID type is observed to be used in different applications. Several reading devices and RFID base stations with integrated coils are already available on the market, but these devices are generally with a great size. It is thus searched more and more to reduce the size of these devices in order to mount them in any type of objects, as the microreader module of the present invention.

The different components of this microreader module are mounted by a traditional technique of surface mounting. So this microreader module is made of a compact shape with a small size in order to be used simply in different applications. Such a microreader module can be used for example in industry of locks or access to many buildings, in vehicle field in particular in a vehicle immobiliser, for tool or instrument protection, for office, inventory, stock or logistic management, or in other applications.

With respect to the microreader module of the present invention, it is known from European patent EP 1 279 142 of the same Applicant, a transponder device made under the shape of an electronic component, which can be mounted on an object to be identified. For that, the transponder device includes in particular a switching integrated circuit and an antenna, which are mounted and encapsulated on a first surface of a same substrate. External contact terminals are provided on an external surface of the transponder device. Some of these terminals are electrically connected to the switching integrated circuit and/or the antenna in order to have an electric access from the exterior to the encapsulated elements of the transponder device.

This transponder device is made under the shape of an electronic component of a small size, which is for example 30 mm long, 20 mm large and 10 mm thick. However, such a transponder device with these encapsulated elements can be used only for a function of transmission and reception of signals with a determined frequency specific to the antenna and the resonant circuit of the switching circuit adapted to the antenna. It is necessary to connect other external components to allow other functionalities of the transponder device, for example another antenna to device contact terminals, which constitutes a drawback.

It is also known from Swiss patent CH 669 079, a method to assemble a coil to an integrated circuit not encapsulated for a use as a transponder (TAG). For that, the integrated circuit is firstly mounted on a printed circuit board. Connection pads of the integrated circuit are linked by metallic wires (bonding) to corresponding pads of the printed circuit board. After that, the coil is disposed and secured on the printed circuit board, and the wire ends of the coil are soldered on respective pads of the printed circuit board. This assembly of elements depends also on the dimension imposed by the application. However, the electronic component obtained is not with a very compact shape and does not allow configure it for several functions.

The object of the invention is to provide a small size microreader module having a reduced number of components, and easy to be configured for several applications by alleviating the drawbacks of the prior art. Said small size module has a compact shape to facilitate its use.

To this end, the invention concerns a microreader module according to features of the independent claim 1.

Advantageous embodiments of the microreader module are defined in dependent claims 2 to 10.

One advantage of the microreader module according to the invention is that it can be easily configured in a normal reader mode or in a transponder mode with the same coil. The module configuration in the reader mode or in the transponder mode is effected via the switching means. These switching means are directly or indirectly linked to the coil and encapsulated with all the other components of said module on the first surface of the substrate. Thanks to these switching means, the size and the number of components necessary to accomplish some functions are reduced.

Said microreader module according to the invention can include a first reader integrated circuit and a second transponder integrated circuit, which are mounted and encapsulated on the first surface of the substrate. Preferably, the second integrated circuit is a microcontroller linked by a data and instruction bus to the first integrated circuit. In the reader mode, the coil is advantageously connected only to the first reader integrated circuit through the switching means for a communication with a transponder near to the module. When in the transponder mode, this same coil is advantageously linked solely to the second integrated circuit, which is the microcontroller through the switching means. So a part of transponder circuit of the microcontroller can communicate data signals by the same coil on request of an external reader unit.

Advantageously all the electronic components are mounted on the first surface having a printed circuit of the substrate by a traditional surface mounting technique, which is not expensive. A flip chip technology can be used for such a mounting. The contact pads of each integrated circuit are electrically connected to respective contact pads of the printed circuit by metallic bond wires. The wire ends of the coil are also bonded to respective pads of the printed circuit for an electrical connexion of the coil. This coil can be advantageously disposed above some peripheral components. Once all the electronic components are mounted on the first surface of the substrate and electrically connected, an encapsulation operation is effected with a resin or mold, or with an opaque cover secured on the first surface edge of the substrate, or with a combination of the resin or mold and the cover.

Advantageously contact terminals are arranged in periphery of a second external surface of the substrate. At least certain of these external contact terminals are electrically connected to the encapsulated electronic components by conductive paths (conductive holes) made through the substrate, which is in isolating material. So the microreader module can be made under the shape of a compact surface mounting electronic element of SMD type.

Advantageously the switching means are realised in part in the first integrated circuit and in part in the second integrated circuit to reduce the number of components of the microreader module. An external contact terminal is electrically linked to the microcontroller for supplying a switching signal to the switching means in order to configure the microreader module in reader mode or in transponder mode.

The aims, advantages and features of the microreader module will become more clearly apparent in the course of the following description of at least one embodiment of the invention, which is given with reference to the drawings, in which:
Figure 1 shows in simplified manner an embodiment of a microreader module according to the invention able to communicate with a transponder or with another reader, and
Figure 2 shows a simplified three-dimensional view of elements which compose the microreader module according to the invention.

The following description is relative to a microreader module for which all the electronic components of the microreader module, which are well known by a man skilled in the art in this technical field, will not be explained in detail.

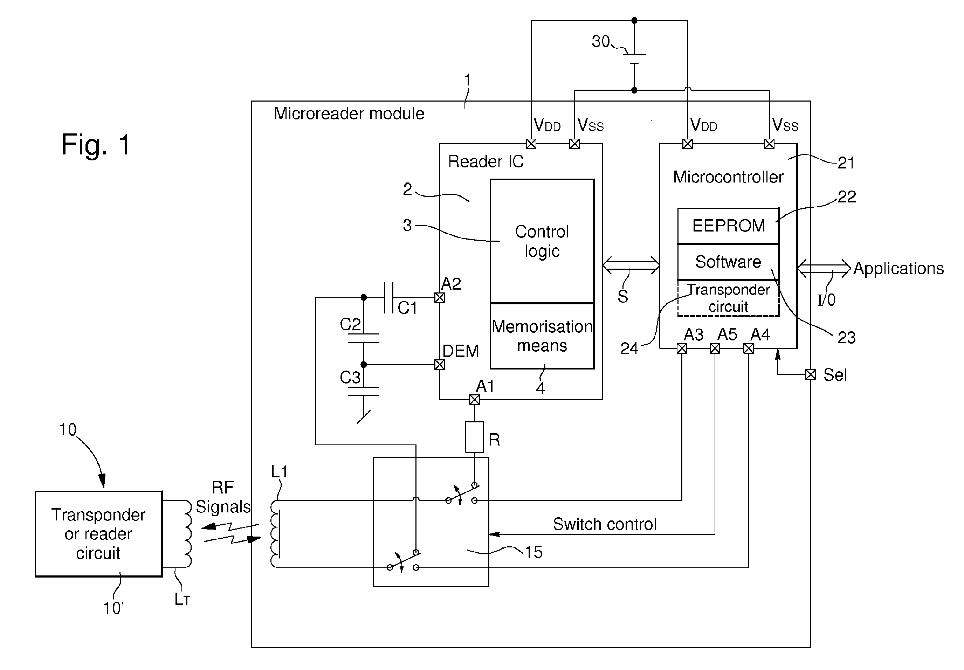

Figure 1 shows in simplified manner an embodiment of a microreader module 1 able to establish a communication wireless by data or control RF signals with at least one transponder or one external reader unit 10. The transponder or the reader unit 10, which is constituted of a transponder or reader circuit 10' and an antenna L_{T} has to be situated near to the microreader module 1 in a determined zone around the antenna coil L1 of said module for the establishment of the communication.

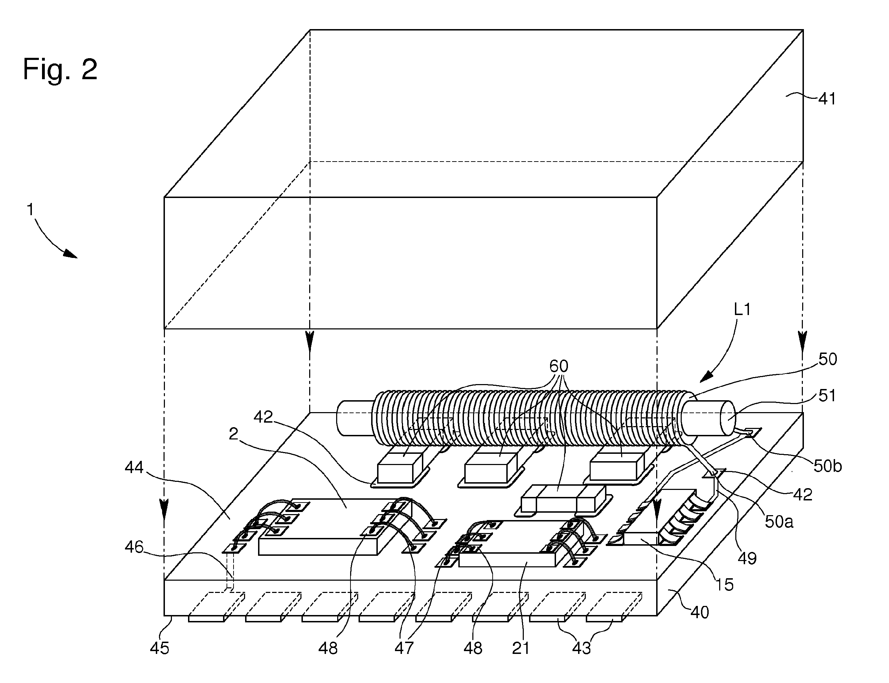

The microreader module 1 includes essentially at least a first reader integrated circuit 2, a second integrated circuit 21 having a transponder circuit 24, an antenna coil L1, and switching means 15 directly connected to the coil L1. The switching means are controlled by a switching signal supplied by a pad A5 of the second integrated circuit 21, which is preferably a microcontroller. This switching signal is dependent on a control signal Sel supplied to the microcontroller 21 by an external contact terminal of the module as explained hereafter in Figure 2. As a function of the control signal Sel, the switching means 15 allow link the antenna coil L1 to the first reader integrated circuit 2 in a traditional reader mode of the microreader module as shown in Figure 1, or to the second transponder integrated circuit 21 in a transponder mode. So a single antenna coil L1 can be used for the microreader module configured either in the reader mode or in the transponder mode.

The first reader integrated circuit 2 traditionally includes a control logic 3 and memorisation means 4 for storing data or parameters. The control logic 3 can be a state machine or a hard-wired logic or a microprocessor. A cipher algorithm is stored in the memorisation means 4 to be set in operation inside the control logic 3 for a transmission of ciphered data and/or control signals with a transponder to be interrogated.

The first integrated circuit 2 can include also an oscillator stage for clocking operations of the control logic 3, a modulator stage, a demodulator stage, and eventually a random number generator not shown in Figure 1. The oscillator stage can be composed of a phase locked loop PLL in order to allow generate a carrier frequency of the signals transmitted by the antenna coil between 100 and 150 kHz, for example of the order of 125 kHz. The first reader integrated circuit 2 and the second transponder integrated circuit 21 are supplied in electric energy by a continuous voltage source 30 typically of the order of 5 V. This voltage source is linked to two external contact terminals V_{DD} and V_{SS} from the exterior of the module.

In the reader mode, the antenna coil L1 is linked through the switching means 15 on the one hand through a resistor R to a pad A1 of the first integrated circuit, and on the other hand via a capacity C1 to a pad A2 linked to a modulator stage of the first integrated circuit 2. By the arrangement of the resonant circuit adapted to the antenna coil L1, the radiofrequency signals RF transmitted by the antenna coil L1 have a carrier frequency of the order of 125 kHz. In a radiofrequency signal reception phase, the antenna coil L1 is linked also to a pad DEM through a capacitive divider C2, C3. The intermediate tie between the capacities C2 and C3 is connected to the pad DEM.

The second transponder integrated circuit 21 is preferably a microcontroller, which traditionally includes memorisation means, such as a non volatile memory EEPROM 22, and a software part 23 for operating for example a traditional cipher algorithm. The microcontroller includes also a transponder circuit 24 with a unique identification code stored for a specific recognition by an external reader unit. This microcontroller is connected to the first reader integrated circuit 2 by a data and instruction bus S. In the reader mode, data drawn by the first integrated circuit can be transferred to the microcontroller 21 by the bus S. This microcontroller 21 can provide also configuration parameters to the first reader integrated circuit 2 on the base of input signals I/O received from the exterior via external contact terminals of the module. Information or control signals can be also provided by the microcontroller for the operation of some external instruments (switches, diodes LED, ...).

In the selected transponder mode, the antenna coil L1 is directly linked through the switching means 15 to two pads A3 and A4 of the microcontroller 21. In this transponder mode, the transponder circuit 24 of the microcontroller waits for receiving by the antenna coil L1, interrogation signals produced by an external reader unit near to the microreader module. On request of the external reader unit 10, data signals, which include the single identification code of the transponder circuit 24, are transmitted by the antenna coil L1. The carrier frequency of the signals transmitted or received by the microreader module in the transponder mode can be the same like the carrier frequency generated by the first integrated circuit 2 in the reader mode.

Of course, it can be provided to realise an antenna coil L1 and a resonant circuit in relation to the first integrated circuit 2 or to the second integrated circuit 21 for the microreader module 1 able to operate with a carrier frequency greater than MHz. Furthermore, any type of data or control communication via radiofrequency signals RF can be envisaged between the microreader module and a transponder or an external reader unit 10. A communication Halp-duplex and an amplitude modulation AM or OOK of data or controls can for example be used. Furthermore, it can be possible to interrogate simultaneously several transponders in a determined zone around the microreader module by using a traditional anti-collision process.

The switching means 15 can be realised by two first MOS transistors of a first type of conductivity, and two second MOS transistors of a second type of conductivity. The source terminal of each first transistor is connected to a respective connection terminal of the antenna coil L1. The drain terminal of each first transistor is connected via a resistor R or capacities C1, C2, to a respective pad A1, A2, DEM of the first integrated circuit 2. The source terminal of each second transistor is connected to a respective connection terminal of the coil and the drain terminal of each second transistor is connected to a respective pad A3, A4 of the second integrated circuit 21. The gate terminal of the two first transistors and the two second transistors is connected to the pad A5 of the microcontroller 21. A switching signal is supplied by this pad A5 to the gates of first and second transistors on the base of a control signal supplied to the microcontroller by an external contact terminal Sel. If the terminal Sel is linked to the terminal V_{DD} or to the terminal V_{SS}, the microreader module 1 is easily configured either in reader mode or in transponder mode.

In an embodiment not shown, the switching means 15 can be integrated in part in the first integrated circuit 2 and in part in the second integrated circuit 21, which is the microcontroller 21. The control signal Sel is supplied for each integrated circuit or transferred for one circuit to the other to configure the microreader module in reader mode or in transponder mode. These switching means can also be a multiplexer circuit.

The compact structure of the microreader module is explained hereafter in Figure 2, which shows in simplified manner all the elements of said microreader module 1. The elements of the microreader module can be mounted according to a flip chip technology. The first integrated circuit 2, the microcontroller 21, the switching means 15, the antenna coil L1 and different peripheral components 60 are all mounted on a first surface 44 having a printed circuit of a substrate 40. Of course if the switching means are integrated in part in each integrated circuit 2, 21, a reduction of one electronic component to be mounted on the first surface of the substrate can be realised. The electronic components 60 are for example capacitors, such as the capacitors C1, C2, C3 explained in Figure 1, and one or several resistors, as the resistor R shown in Figure 1, but other components can be still provided.

The first integrated circuit 2 and the second integrated circuit 32 include contact pads 48 to be electrically linked by using metallic wires 47 (bonding) to respective contact pads 42 of the printed circuit. By simplification, the printed circuit is shown only by these contact pads 42 for the electric connection of different electronic components, and some connection paths 49 connecting the electronic components. Of course, it can be envisaged to connect contact bumps of each integrated circuit 2 and 21 directly on contact pads of the printed circuit arranged in a similar manner of the contact bumps of the integrated circuits. The contact straps of the switching means 15 and contact terminals of the peripheral components 60 are simply soldered on the corresponding contact pads of the printed circuit.

The antenna coil L1 can include a winding 50 with several turns disposed on a magnetic rod 51, such as in ferrite, of cylindrical shape for example. This coil L1 is preferably mounted above peripheral components 60 to have more place in width, and eventually to avoid any parasitic perturbation with the other components. The wire ends 50a and 50b of the coil are directly bonded each on a respective contact pad 42 of the printed circuit. The dimension of such a coil can be for example of 9 to 10 mm long, and of a diameter between 1 and 1.5 mm.

Once all the electronic components are mounted and encapsulated on the first surface 44 of the substrate 40, which is preferably made in opaque isolating material, an encapsulation operation of the components on this first surface is made. This encapsulation can be realised in a traditional mold with an epoxy resin 41 or a polycarbonate mold.

I can also be envisaged to encapsulate all the components under an opaque cover 41 in isolating material, which is secured at the edge of the first surface of the substrate. The encapsulation can be also realised with the resin or mold, which is covered by the preformed cover 41. In this manner, the microreader module is under the shape of a very compact element of small size (12.1 mm x 6.1 mm x 3 mm), like the transponder device defined in the European patent EP 1 279 142 of the same Applicant, but able to accomplish in more functions of reader and transponder.

Several external contact terminals 43 are realised on a second exterior surface 45 of the substrate reverse to the first surface 44. These terminals can be preferably arranged in periphery of the second surface 45. A first series of external terminals, which are regularly spaced, is disposed for example on a first side of the second surface 45, and a second series of the external terminals, which are also regularly spaced, is disposed on a second side reverse to the first side of the second surface 45 of the substrate 40. Each series of external terminals include an equivalent number of terminals.

At least certain of these external terminals 43 are electrically connected to some electronic components 2, 21, which are encapsulated on the first surface 44 of the substrate. These external contact terminals are for example at least the terminals Sel, V_{DD}, V_{SS} explained in Figure 1. The pads of the circuits A1, A2, A3, A4, A5, DEM can eventually be connected to external contact terminals 43. The electric connection of each of these contact terminals to the encapsulated electronic components can be realised by conductive paths 46 made through the isolating substrate, which can be a printed circuit board.

So, the microreader module 1 is realised under the compact shape of a surface mounting component of SMD type. It can be used as an autonomous RFID under-system. In this manner, it can be easily mounted on or in different objects, such as a vehicle, a house door, and connected to any peripheral electronic circuits. External electronic components can also be directly linked to the external contact terminals 43 on the second surface 45 of the substrate 40. It can be provided for example to connect directly to the module a continuous voltage source, which is composed of a battery of small size.

From the description that has just been given, multiple variants of the microreader module can be devised by those skilled in the art without departing from the scope of the invention defined by the claims. It could be thought the realization of such a compact microreader module, which includes only the first integrated circuit, the coil and certain peripheral components encapsulated on the first surface of the substrate. The first integrated circuit can be controlled by the second integrated circuit in the transponder mode via the switching means, which can be integrated in part in the first and second integrated circuits. The external contact terminals can be disposed on the side of the substrate and not on the second surface of the substrate.

## Claims

1. Microreader module (1) including mounted and encapsulated on a first surface (44) of a substrate (40), at least a first integrated circuit (2) with control logic (3) and memorisation means (4), and a coil (L1) used as an antenna for transmission and reception of data and control signals of the first integrated circuit for a wireless communication with at least one transponder (10) located inside a determined detection area around the module antenna, several external contact terminals (43) being arranged on an external surface (45) of the module, whose some terminals are electrically linked to the first integrated circuit and/or the coil encapsulated, **characterised in that** the microreader module can be configured in a reader mode or in a transponder mode with the same coil (L1) via switching means (15) linked to the coil, and **in that** said switching means are arranged on the first surface of the substrate and controlled via a control signal (Sel) supplied by at least one of said external contact terminals (43) in order to arrange said module in reader mode or in transponder mode.

2. Microreader module (1) according to claim 1, **characterised in that** the same coil (L1) is connected to the first reader integrated circuit (2) and to a second transponder integrated circuit (21) via switching means (15) in order to configure said module in a reader mode by connecting the coil through the switching means to the first integrated circuit or in a transponder mode by connecting the coil through the switching means to the second integrated circuit as a function of a control signal (Sel) supplied to the switching means through the first or second integrated circuits.

3. Microreader module (1) according to claim 2, **characterised in that** the second transponder integrated circuit (21) is a microcontroller linked to some external contact terminals (43) to supply data or instructions to a peripheral system or to receive data or configuration signals, and **in that** the microcontroller, which is provided with a software (23), a non volatile memory (22) and a transponder circuit (24), is connected by a data or control bus (S) to the first reader integrated circuit (2).

4. Microreader module (1) according to any one of claims 2 and 3, **characterised in that** the switching means (15) are formed as a peripheral element, which is connected to contact pads (42) of a printed circuit (49) made on the first surface (44) of the substrate (40) in order to be linked to the coil (L1) and to the two integrated circuits (2, 21).

5. Microreader module (1) according to any one of claims 2 and 3, **characterised in that** said switching means (15) are integrated partially in the first integrated circuit (2) and partially in the second integrated circuit (21).

6. Microreader module (1) according to any one of claims 4 and 5, **characterised in that** the switching means include two first MOS transistors of a first type of conductivity, whose the source terminal of each first transistor is linked to a respective connection terminal of the coil (L1) and the drain terminal of each first transistor is linked to a respective pad (A1, A2, DEM) of the first integrated circuit (2), and two second MOS transistors of a second type of conductivity, whose the source terminal of each second transistor is linked to a respective connection terminal of the coil and the drain terminal of each second transistor is linked to a respective pad (A3, A4) of the second integrated circuit (21), the gate terminal of the two first transistors and the two second transistors being connected to a pad (A5) of the second integrated circuit, which receives the control signal (Sel) by one of external contact terminals (43).

7. Microreader module (1) according to any one of the preceding claims, for which all the electronic components, such as the integrated circuits (2, 21), the coil (L1) and peripheral elements (15, 60), are fixed and encapsulated on the first surface (44) with printed circuit (49) of the substrate, **characterised in that** the external contact terminals (43) are made on a second external surface (45) of the substrate reverse to the first surface, the external contact terminals being electrically connected through the substrate in insulating material to connection paths (49) of a printed circuit of the first surface connecting the electronic components, and **in that** the external contact terminals are arranged in periphery of the second surface (45) of the substrate so that the microreader module is made as a surface mounting electronic element of SMD type.

8. Microreader module (1) according to any one of the preceding claims, for which two external terminals (43) of the module are provided to be linked to two terminals (V_{DD}, V_{SS}) of a continuous voltage source (30) for electrically supplying the integrated circuits (2, 21), **characterised in that** the module can be configured in reader mode or in transponder mode by connecting one external contact terminal (43) for the control of the switching means (15) to one or the other of the two terminals for electric supplying.

9. Microreader module (1) according to any one of the preceding claims, **characterised in that** the coil, which includes a magnetic material rod (51), such as ferrite, and a winding with several turns (50) on the rod, is positioned on some electronic components and encapsulated on the first surface (44) of the substrate (40) with all the electronic components, two ends (50a, 50b) of the winding being bonded on respective contact pads (42) of a printed circuit of the first surface of the substrate.

10. Microreader module (1) according to any one of the preceding claims, **characterised in that** all the electronic components (2, 15, 21, 60, L1) mounted on the first surface (44) of the substrate (40) are encapsulated by an insulating opaque cover (41) in material resisting of the conditions of the environment, which is fixed in the edge of the first surface of the substrate, or by a resin or mold, or by a combination of the cover and the resin or mold.
